**Europäisches Patentamt**

**European Patent Office**

**Office européen des brevets**

(19)

(11) Veröffentlichungsnummer : **0 030 590**
**B1**

(12) **EUROPÄISCHE PATENTSCHRIFT**

(45) Veröffentlichungstag der Patentschrift :
**16.02.83**

(51) Int. Cl.³ : **C 08 L 27/06**, C 08 L 33/12

(21) Anmeldenummer : **80105959.3**

(22) Anmeldetag : **02.10.80**

(54) **Plastisol.**

(30) Priorität : **12.12.79 DE 2949954**

(43) Veröffentlichungstag der Anmeldung :
**24.06.81 Patentblatt 81/25**

(45) Bekanntmachung des Hinweises auf die Patenterteilung : **16.02.83 Patentblatt 83/07**

(84) Benannte Vertragsstaaten :
**FR GB IT SE**

(56) Entgegenhaltungen :
**DE A 2 722 752**
**DE A 2 909 039**

(73) Patentinhaber : **Röhm GmbH**
**Kirschenallee Postfach 4242**
**D-6100 Darmstadt 1 (DE)**

(72) Erfinder : **Siol, Werner, Dr.**
**Mühlbergstrasse 4**
**D-6102 Pfungstadt (DE)**
Erfinder : **Quis, Peter, Dr.**
**Pfannmüllerweg 26**
**D-6100 Da.-Neu-Kranichstein (DE)**
Erfinder : **Sütterlin, Norbert, Dr.**
**Am Horeth 23**
**D-6105 Ober-Ramstadt (DE)**
Erfinder : **Hetterich, Winfried**
**Braunshardter Weg 11**
**D-6100 Darmstadt (DE)**

### Plastisol

Die Erfindung betrifft Plastisole auf Basis eines feinteiligen Kunststoffes und eines organischen Weichmachers in einem Mengenverhältnis von 10 : 3 bis 1 : 10 und Füllstoffen. Plastisole dieser Art sind Gegenstand der deutschen Offenlegungsschrift 27 22 752. Sie enthalten als feinteiligen Kunststoff ein zweischaliges Emulsionspolymerisat gemäß dem Oberbegriff des Hauptanspruches und unterscheiden sich dadurch von herkömmlichen Plastisolen, die feinteiliges Polyvinylchlorid vom Pastentyp enthalten. Sie werden in der gleichen Weise wie herkömmliche PVC-Plastisole verarbeitet und geliert.

Die Plastisole gemäß der genannten deutschen Offenlegungsschrift haben gegenüber den reinen PVC-Plastisolen mehrere Vorteile, aber aufgrund des darin enthaltenen mehrschaligen Emulsionspolymerisats den Nachteil eines höheren Preises. PVC-Plastisole werden deshalb in den Fällen bevorzugt, in denen es auf einen niedrigen Preis ankommt.

Während des Geliervorganges durchläuft die Viskosität eines PVC-Plastisols ein Minimum im Temperaturbereich zwischen etwa 30 und 70 °C. Danach steigt durch die einsetzende Gelierung die Viskosität wieder an. Beim Viskositätsminimum neigt der Plastisolfilm dazu, von senkrechten oder steilen Flächen abzulaufen und so dünn zu werden, daß der Beschichtungs- und Geliervorgang mehrfach wiederholt werden muß, bis ein Überzug von der gewünschten Schichtdicke erreicht ist.

Es bestand die Aufgabe, diesen Nachteil von PVC-Plastisolen zu vermeiden. Die Aufgabe konnte nicht durch den Zusatz von Polymerisaten gelöst werden, die sich im Temperaturbereich des Viskositätsminimums in dem Plastisol lösen. Der Lösevorgang setzt bereits bei der Lagerung allmählich ein, so daß das Plastisol bei mehrtägiger Lagerung verdickt und unbrauchbar wird.

Es wurde gefunden, daß die Plastisole gemäß dem Hauptanspruch, die Polyvinylchlorid vom Pastentyp und ein Emulsionspolymerisat wie in den Plastisolen gemäß der DE-OS 27 22 752 nebeneinander enthalten, ein flacheres Viskositätsminimum als reine PVC-Plastisole aufweisen und in schwächerem Maße als diese zum Ablaufen von steilen Flächen während des Gelierverfahrens neigen.

Die Wirkung des zweischaligen Emulsionspolymerisats beruht auf seinem Aufbau aus einem mit dem Weichmacher bei niedriger Temperatur, z. B. Raumtemperatur, verträglichen Kernpolymerisat, dessen spontane Quellung durch den Weichmacher während der Lagerung durch ein das Kernpolymerisat umhüllendes Schalenpolymerisat, das bei niedrigen Temperaturen mit dem Weichmacher unverträglich ist und sich bei hohen Temperaturen darin löst, gehemmt wird. Die Gelierung des zweischaligen Emulsionspolymerisats beginnt bereits in dem Temperaturbereich des Viskositätsminimums von PVC-Plastisolen unter allmählicher Verdickung. Dieser Vorgang wirkt der Viskositätsverminderung beim Erwärmen des reinen Weichmachers entgegen. Die Verdickung soll bei 30 °C noch gering sein, um die Lagerstabilität und die Verarbeitbarkeit des Plastisols zu gewährleisten. Bei 70 °C soll sich die Verdickungswirkung voll entfalten. Die für die erfindungsgemäßen Plastisole besonders geeigneten Emulsionspolymerisate haben bei 30 °C einen Verdickungsfaktor zwischen 1 und 3 und bei 75 °C über 3. Der Verdickungsfaktor V wird an einem PVC-freien Gemisch aus Dioctylphthalat als Weichmacher und 5 % von dessen Gewicht an pulverförmigen Emulsionspolymerisat im Verhältnis zu reinem Dioctylphthalat bestimmt und ist definiert als der Quotient :

$$V = \frac{\text{Viskosität von Dioctylphthalat mit 5 Gew.-\% Zusatz}}{\text{Viskosität von Dioctylphthalat}}$$

Typische Emulsionspolymerisate in den erfindungsgemäßen Plastisolen ergeben bei 30 °C einen Verdickungsfaktor $V_{30}$ zwischen 1 und 2 und bei 75 °C einen Verdickungsfaktor $V_{75}$ zwischen 3,5 und 7. Beispielsweise hat ein zweischaliges Emulsionspolymerisat mit einem Kern aus Polybutylmethacrylat und einer Schale aus Polymethylmethacrylat die Werte $V_{30} = 1,77$ und $V_{75} = 6,99$, während für ein nicht schalenförmig aufgebautes Emulsionsmischpolymerisat aus 88 Gew.-% Methylmethacrylat und 12 Gew.-% Butylmethacrylat $V_{30} = 1,23$ und $V_{75} = 1,16$ gilt. Die Einwirkung des erwähnten zweischaligen Emulsionspolymerisats auf die Fließeigenschaften eines PVC-Plastisols werden bei der Gegenüberstellung der Plastisole mit und ohne diesen Zusatz deutlich. Gleiche Mengen der beiden Plastisole wurden auf ein schräggestelltes Blech aufgetragen und zum Gelieren auf 130 °C erwärmt. Die Länge der Fließwege unter gleichen Gelierungsbedingungen zeigt das vorteilhafte Verhalten der neuen Plastisole. Der Unterschied beruht nicht auf der etwas höheren Ausgangsviskosität des erfindungsgemäßen Plastisols B, denn bei einem verminderten Polymerisatgehalt und niedrigerer Ausgangsviskosität des Plastisols C ergibt sich ebenfalls ein kürzerer Fließweg als beim reinen PVC-Plastisol A.

(Siehe die Tabelle, Seite 3)

|  | Viskosität | Fließweg bei 130°C<br>Neigungswinkel 30° |
|---|---|---|
| A) Plastisol aus |  |  |
| 50 % Dioctylphthalat |  |  |
| 50 % PVC | 815 mPa s | 11,7 cm |
| B) Plastisol aus |  |  |
| 50 % Dioctylphthalat |  |  |
| 45 % PVC |  |  |
| 5 % Polymerisatzusatz | 930 mPa s | 6,1 cm |
| C) Plastisol aus |  |  |
| 53 % Dioctylphthalat |  |  |
| 42 % PVC |  |  |
| 5 % Polymerisatzusatz | 703 mPa s | 8,4 cm |

Als Grundkomponenten der neuen Plastisole werden die üblichen Bestandteile eingesetzt, d. h. sogenanntes Pasten-PVC mit einem K-Wert von 60 bis 80 und einer Teilchengröße zwischen 0,5 und 35 μm, flüssige, hochsiedende Weichmacher, wie Dioctyl- oder Dinonylphthalat, Dioctylsebazat und andere Sebazinsäureester, Ester der Azelainsäure, polymere Weichmacher auf Basis von Polyadipinsäureestern, Carbamidsäureharzen oder Harnstoff-Formaldehydharzen, und gegebenenfalls Füllstoffe, wie Kreide, Kaolin, Glimmermehl, Farbpigmente u. dergl.

Auch für die Mengenverhältnisse der Grundbestandteile gelten die bei PVC-Plastisolen üblichen Grenzen, wobei allerdings an die Stelle des Pasten-PVC dessen Gemisch mit dem zweischaligen Emulsionspolymerisat tritt. Da die Viskositäten der neuen Plastisole bei gleichem Gehalt an feinteiligem Kunststoff häufig etwas höher liegen als bei reinen PVC-Plastisolen, kann der Anteil an feinteiligen Kunststoffen bzw. an Füllstoffen bei gleichen Verarbeitungseigenschaften etwas kleiner sein.

Der Anteil des Pasten-PVC an den feinteiligen Kunststoffen kann zwischen 20 und 99 Gew.-% liegen, während der verbleibende Anteil von 80 bis 1 Gew.-% auf das zweischalige Emulsionspolymerisat entfällt. Wenn lediglich die Fließeigenschaften eines typischen PVC-Plastisols verbessert werden sollen, kann dieser Anteil zwischen 1 und 20, vorzugsweise zwischen 2 und 10 Gew.-% liegen. Höhere Anteile des Emulsionspolymerisats können dazu dienen, die Wärmeformbeständigkeit oder die Haftfestigkeit an metallischen Untergründen des gelierten Materials zu erhöhen, oder die Vergilbungsneigung und die Korrosionsgefahr, die beim Erhitzen des Materials auf einen metallischen Untergrund ausgeht, herabzusetzen. Schließlich kann durch einen hohen Anteil eines mit dem Weichmacher besonders verträglichen Emulsionspolymerisats das Ausschwitzen des Weichmachers aus dem gelierten Material bei höheren Gebrauchstemperaturen vermindert werden. Diese Vorteile gelten zwar auch für die aus der DE- OS 27 22 752 bekannten, PVC-freien Plastisole, lassen sich aber durch den nur teilweisen Ersatz des PVC auf kostengünstigere Weise erreichen.

Für den Aufbau und die Herstellung des zweischaligen Emulsionspolymerisats und seine Abstimmung auf den zu verwendenden Weichmacher gelten die Ausführungen der DE-OS 27 22 752 entsprechend.

Das Verhältnis zwischen Kern und Schale liegt zwischen 3 : 1 und 1 : 3. Das Kernmaterial besteht aus einem Homo- oder Mischpolymerisat, das sich durch eine hohe Verträglichkeit mit dem Weichmacher auszeichnet. Das Kernmaterial allein würde schon bei Raumtemperatur innerhalb kurzer Zeit mit dem Weichmacher gelieren. Die höhere Viskosität der erfindungsgemäßen Plastisole ist auf einen kleinen Anteil des Emulsionspolymerisats zurückzuführen, dessen Kern nicht vollständig von dem Schalenmaterial umhüllt ist und das sich gleich nach dem Vermischen der Komponenten in dem Weichmacher löst.

Das Schalenmaterial ist ein Homo- oder Mischpolymerisat des Methylmethacrylats mit einer Glastemperatur über 50 °C. Diese verhältnismäßig harte und wärmebeständige Hülle, die den Kern mit einer unter 50° liegenden Glastemperatur einschließt, macht die Isolierung des zweischaligen Emulsionspolymerisats durch Sprühtrocknung und seine Lagerung als nicht verklumpendes Pulver möglich. Das Schalenmaterial ist gegenüber dem Weichmacher bei Raumtemperatur beständig und gewährleistet die Stabilität des Plastisols bei der Lagerung. Erst bei Temperaturen über 30 °C, insbesondere bei 40 bis

**0 030 590**

50 °C wird die Sperrwirkung der äußeren Hülle durchbrochen und das Kernmaterial kann in dem Weichmacher quellen oder in Lösung gehen.

Da die Plastisole häufig als Überzugsmittel, insbesondere für grundierte Bleche, verwendet werden, sind am Aufbau des zweischaligen Emulsionspolymerisats vorzugsweise haftverbessernde Monomere beteiligt. Als solche sind ungesättigte Carbonsäuren, wie Acryl- oder Methacrylsäure, Hydroxyalkylester oder Aminoalkylester dieser Säuren zu nennen. Besonders wirksam ist N-Vinylimidazol. Die haftverbessernden Comonomeren können in Mengen von z. B. 0,1 bis 5, vorzugsweise 1 bis 2 Gew.-% (bezogen auf das Gesamtgewicht des Emulsionspolymerisats) in das Kernmaterial oder in das Schalenmaterial oder in beide einpolymerisiert sein.

Stattdessen kann man auch, wie allgemein gebräuchlich, bekannte Haftvermittler zusetzen, z. B. mehrfunktionelle Methacrylsäureester für blanke oder grundierte Metalle oder Polyaminoamide für grundierte Metalle. Weiterhin können die üblichen Zusätze für PVC-Plastisole, wie Stabilisatoren oder Thixotropierungsmittel, in den gebräuchlichen Mengen mitverwendet werden.

Es ist zwar möglich, das Emulsionspolymerisat in ein fertiges PVC-Plastisol einzuarbeiten. Wesentlich vorteilhafter ist es, zunächst das pulverförmige PVC mit dem ebenfalls pulverförmigen Emulsionspolymerisat und gegebenenfalls den Füllstoffen trocken zu mischen und das Gemisch in den Weichmacher einzuarbeiten. Es ist vorteilhaft, wenn die Teilchen des Emulsionspolymerisats eine ähnliche Größe wie die PVC-Teilchen aufweisen. Die Teilchengröße des Emulsionspolymerisats liegt zwischen 0,05 und 5 μm, wobei allerdings bei der Trocknung eine begrenzte Teilchenvergrößerung durch Agglomeration eintreten kann. Aggregate mit einer durchschnittlichen Teilchengröße unter 50 μm sind bevorzugt.

Beispiel

Ein Tauchplastisol für Teile aus Stahlblech wird wie folgt zusammengesetzt (T = Gewichtsteile)

a) Kunststoffkomponente
400 T Pasten-PVC, K-Wert 70
40 T zweischaliges Emulsionspolymerisat aus
50 Gew.-% Polybutylmethacrylat als Kernmaterial
50 Gew.-% Polymethylmethacrylat als Schalenmaterial Primärteilchen ca. 0,3 μm, Korngröße des getrockneten Pulvers 5 bis 20 μm.
Verdickungsfaktor $V_{30} = 1,77$ ; $V_{75} = 6,99$

b) Weichmacher
212 T Dioctylphthalat

c) Füllstoffe
190 T gecoatete Kreide
87 T Titandioxid

d) sonstige Zusätze
4,4 T handelsüblicher PVC-Stabilisator (Estabex® EN)
155 T Neopentylglykol-dimethacrylat (als Haftvermittler)
2,5 T Cumolhydroperoxid

Teile aus phosphatiertem Stahlblech werden in das Plastisol getaucht und abtropfen gelassen. Der gebildete Überzug wird 15 min bei 140 bis 170 °C eingebrannt. Es treten keine Oberflächenstörungen durch Ablaufen der Beschichtung an steilen Flächen der Blechteile auf.

**Ansprüche**

1. Plastisol auf Basis eines feinteiligen Kunststoffes und eines organischen Weichmachers in einem Mengenverhältnis von 10 : 3 bis 1 : 10 und Füllstoffen, enthaltend als feinteiligen Kunststoff ein aus einem mit dem Weichmacher verträglichen Kernpolymerisat und einem mit dem Weichmacher unverträglichen, das Kernpolymerisat umhüllenden Schalenpolymerisat im Mengenverhältnis von 3 : 1 bis 1 : 3 aufgebautes Emulsionspolymerisat, wobei das Kernpolymerisat aus

A. 15 bis 100 Gew.-% eines Acrylsäurealkylesters mit mindestens 3 und/oder eines Methacrylsäurealkylesters mit mindestens 2 Kohlenstoffatomen im Alkylrest und/oder Styrol und gegebenenfalls
B. bis zu 85 Gew.-% Methylacrylat oder -methacrylat oder Äthylacrylat und
C. bis zu 20 Gew.-% an anderen radikalisch polymerisierbaren Monomeren aufgebaut ist

und das Schalenpolymerisat ein Homopolymerisat des Methylmethacrylats oder ein zu mindestens 80 Gew.-% daraus aufgebautes Mischpolymerisat mit einer Glastemperatur über 50 °C ist, dadurch

4

gekennzeichnet, daß der feinteilige Kunststoff aus einem Gemisch von

1 bis 80 Gew.-% des genannten Emulsionspolymerisats und
99 bis 20 Gew.-% Polyvinylchlorid vom Pastentyp

besteht.

2. Plastisol nach Anspruch 1, dadurch gekennzeichnet, daß das zweischalige Emulsionspolymerisat 2 bis 10 Gew.-% (bezogen auf das Gesamtgewicht des feinteiligen Kunststoffes) ausmacht.

3. Plastisol nach den Ansprüchen 1 und 2, dadurch gekennzeichnet, daß das zweischalige Emulsionspolymerisat in Form von Latex-Primärteilchen oder von daraus gebildeten Aggregaten mit einer Teilchengröße unter 50 μm vorliegt.

4. Plastisol nach den Ansprüchen 1 bis 3, dadurch gekennzeichnet, daß das Kernmaterial einen Anteil von 25 bis 50 Gew.-% von dem zweischaligen Emulsionspolymerisat bildet.

5. Plastisol nach den Ansprüchen 1 bis 4, dadurch gekennzeichnet, daß das Emulsionspolymerisat eine mit der Temperatur stetig zunehmende Verdickungswirkung hat und der Verdickungsfaktor (bezogen auf Dioctylphthalat mit einem Zusatz von 5 Gew.-% des Emulsionspolymerisats) bei 30 °C zwischen 1 und 3 und bei 75 °C über 3 liegt.

**Claims**

1. Plastisol based on a finely divided plastics and an organic plasticiser in a ratio of from 10 : 3 to 1 : 10 and fillers, and containing as the finely divided plastics an emulsion polymer made up of a core polymer compatible with the plasticiser and a shell polymer surrounding the core polymer and incompatible with the plasticiser, in a ratio of from 3 : 1 to 1 : 3, wherein the core polymer is made up of

A. 15 to 100 % by weight of an alkyl acrylate with at least 3 carbon atoms in the alkyl group and/or an alkyl methacrylate with at least 2 carbon atoms in the alkyl group and/or styrene, and optionally
B. up to 85 % by weight of methyl acrylate or methacrylate or ethyl acrylate, and
C. up to 20 % by weight of other radically polymerisable monomers,

and the shell polymer is a homopolymer of methyl methacrylate or a mixed polymer consisting of at least 80 % by weight thereof, with a glass transition temperature of over 50 °C, characterised in that the finely divided plastics consists of a mixture of

1 to 80 % by weight of the said emulsion polymer, and
99 to 20 % by weight of paste-type polyvinyl chloride.

2. Plastisol as claimed in claim 1, characterised in that the two-part emulsion polymer constitutes 2 to 10 % by weight (based on the total weight of the finely divided plastics).

3. Plastisol as claimed in claims 1 and 2, characterised in that the two-part emulsion polymer is in the form of primary latex particles or aggregates formed therefrom with a particle size of less than 50 μm.

4. Plastisol as claimed in claims 1 to 3, characterised in that the core material forms a proportion of from 25 to 50 % by weight of the two-part emulsion polymer.

5. Plastisol as claimed in claims 1 to 4, characterised in that the emulsion polymer has a thickening effect which increases constantly with the temperature and the thickening factor (based on dioctyl phthalate to which 5 % by weight of the emulsion polymer have been added) is between 1 and 3 at 30 °C and more than 3 at 75 °C.

**Revendications**

1. Plastisol à base d'une matière synthétique finement divisée et d'un plastifiant organique dans une proportion comprise entre 10 : 3 et 1 : 10, ainsi que de charges, contenant en tant que matière synthétique finement divisée un produit de polymérisation en émulsion constitué par un polymère de noyau, compatible avec le plastifiant, et d'un polymère d'enveloppe incompatible avec le plastifiant et engainant le polymère de noyau dans une proportion comprise entre 3 : 1 et 1 : 3, le polymère de noyau étant fait de :

A. 15 à 100 % en poids d'un ester alcoylique d'acide acrylique comportant au moins 3 atomes de carbone dans le radical alcoyle et/ou d'un ester alcoylique d'acide méthacrylique comportant au moins 2 atomes de carbone dans le radical alcoyle et/ou de styrène et, le cas échéant,
B. jusqu'à 85 % en poids d'acrylate ou méthacrylate de méthyle ou d'acrylate d'éthyle et
C. jusqu'à 20 % en poids d'autres monomères susceptibles de polymérisation radicalaire,

et le polymère d'enveloppe étant un homopolymère du méthacrylate de méthyle ou un copolymère contenant au moins 80 % en poids de celui-ci, avec une température de vitrification supérieure à 50 °C, caractérisé en ce que la matière synthétique finement divisée consiste en un mélange de

1 à 80 % en poids du produit de polymérisation en émulsion mentionné et de 99 à 20 % en poids de chlorure de polyvinyle du type en pâte.

2. Plastisol selon la revendication 1, caractérisé en ce que le produit de polymérisation en émulsion à deux couches entre pour 2 à 10 % en poids dans la composition de la matière synthétique finement divisée.

3. Plastisol selon la revendication 1 ou 2, caractérisé en ce que le produit de polymérisation en émulsion à deux couches se présente sous forme de particules primaires de latex ou d'agrégats formés à partir de celles-ci, d'une grosseur de particules inférieure à 50 microns.

4. Plastisol selon l'une quelconque des revendications 1 à 3, caractérisé en ce que la matière de noyau constitue une part de 25 à 50 % en poids du produit de polymérisation en émulsion à deux couches.

5. Plastisol selon l'une quelconque des revendications 1 à 4, caractérisé en ce que le produit de polymérisation en émulsion a un effet d'épaississement qui augmente de façon continue avec la température et en ce que le facteur d'épaississement (rapporté au phtalate de dioctyle additionné de 5 % en poids du produit de polymérisation en émulsion) se situe entre 1 et 3 à 30 °C et au-dessus de 3 à 75 °C.